# FASCICULE DE BREVET EUROPEEN

(11) **EP 1 908 967 B1**
(45) Date de publication et mention de la délivrance du brevet: **24.03.2010**
(21) Numéro de dépôt: 07301427.6
(22) Date de dépôt: 03.10.2007
(51) Int. Cl.: F16C 1/26

(54) **Dispositif de fixation d'un câble dans une platine support**
Vorrichtung zum Befestigen eines Kabels auf einer Halteplatine
Device for attaching a cable in a support plate

(30) Priorité: 05.10.2006 FR 0654097
(43) Date de publication de la demande: 09.04.2008
(73) Titulaire: Dura Automotive Systems SAS, 91570 Bièvres (FR)
(72) Inventeur: Pradier, Philippe, 42290 Sorbiers (FR); Mathais, Patrick, 42100 Saint-Etienne (FR)
(74) Mandataire: Thivillier, Patrick

(56) Documents cités:
- DE-B3-102004 046 839
- US-A- 5 579 662
- US-B1- 6 295 889

## Description

L'invention se rattache au secteur technique des équipements pour véhicules automobiles.

Plus particulièrement, l'invention concerne la fixation de câbles sur une platine support. Il peut s'agir, par exemple, des câbles de commande, notamment de sélection et de passage des vitesses que présente, d'une manière parfaitement connue, une boîte de vitesses mécanique.

Généralement, le câble est monté avec une douille de connexion, généralement dénommée arrêt de gaine dans le domaine automobile, qui présente une portée circulaire ou bague montée avec capacité de coulissement coaxial limité à l'encontre d'un ressort de rappel.
Ces dispositions permettent d'escamoter la bague par rapport à une gorge que présente la douille. Cette gorge est destinée à être engagée dans une échancrure que présente une partie de la platine support où doit être fixé le câble équipé de la douille. Cette échancrure est constituée par deux bords rectilignes parallèles réunis par un bord circulaire constituant le fond et dont le diamètre correspond sensiblement à celui de la gorge.
Le blocage en position de la douille, dans le fond de l'échancrure, s'effectue par un bossage semi-circulaire formé de manière concentrique au fond arrondi de l'échancrure. Dans le domaine de l'automobile, ce bossage est connu sous le nom de sourire.
Ces dispositions permettent d'assurer la fixation de la douille après introduction de la gorge dans l'échancrure par un effet de clipage. Le sourire coopère avec une collerette formée à l'une des extrémités de la bague au droit de la gorge. L'effet de clipage résulte de la capacité de déplacement limité de la bague par rapport à son ressort de rappel.

Il en résulte que l'effet de clipage est réalisé en fin de course, c'est-à-dire après avoir totalement engagé la gorge de la douille, dans le fond de l'échancrure.

Il est apparu que cette solution n'est pas satisfaisante et ne permet pas de garantir que le clipage est effectivement réalisé. En effet, l'opérateur, compte tenu des conditions dans lesquelles il travaille, a certaines difficultés à constater que le clipage qui effectue, comme indiqué, en fond de course, est effectivement réalisé. Le seul indice que le clipage est effectivement réalisé, provient du bruit lorsque la bague, qui échappe le bossage ou sourire, est rappelée par son ressort. Il se produit en effet une sorte de claquement. Si l'on considère le bruit environnant sur une chaîne de montage de véhicules automobiles, très souvent l'opérateur n'entend pas ce claquement.

Il n'est donc pas exclu que des arrêts de gaine ou douilles ne soient pas suffisamment engagées au fond de l'échancrure et, par conséquent, ne sont pas clipées.
Autrement dit, l'ensemble du câble n'est pas convenablement fixé par rapport à la platine support avec les conséquences que l'on peut imaginer.

On connait également par le document US 5579662 (M. Reasoner) une fixation d'un embout de gaine par clipage dans la rainure d'une platine au moyen de bossages portés par la platine assurant le guidage de l'embout vers le fond de la rainure.

La fixation axiale, suivant le mouvement de clipage, de cet embout dans la rainure est réalisée par interaction des surfaces de contact disposées en regard l'une de l'autre, sur l'embout et les bossages, de manière perpendiculaire au mouvement de clipage.

Le maintien latéral de l'embout est réalisé par les parois latérales des bossages, dirigées vers l'intérieur de la rainure, qui peuvent entrer en contact avec des faces larérales dirigées vers l'extérieur, de l'embout de gaine.

L'invention s'est fixée pour but de remédier à ces inconvénients d'une manière simple, sûre, efficace et rationnelle.

Le problème que se propose de résoudre l'invention est de faciliter à l'opérateur l'introduction et le verrouillage de la douille de connexion des câbles dans la platine support afin d'être certain que le clipage est parfaitement assuré et cela sans nécessiter d'efforts particuliers.

Pour résoudre un tel problème, il a été conçu et mis au point un dispositif de fixation d'un câble dans une platine support présentant au moins une échancrure pour l'engagement, dans le même plan que celui défini par ladite échancrure et à partir de son ouverture, d'une douille de connexion (ou arrêt de gaine) que présente le câble.
Ce dispositif comprend, au niveau de l'ouverture de l'échancrure, des agencements de clipage formés en débordement de l'une au moins de faces d'une partie de la platine support présentant l'échancrure, lesdits agencements coopérant avec une partie de la douille en étant conformés pour :
- créer un effort résistant au moment de l'introduction de la douille à partir de l'ouverture de l'échancrure;
- diriger la douille en position de butée dans le fond de l'échancrure ;
- assurer le blocage irréversible de la douille positionnée dans le fond de l'échancrure, en particulier grâce à une correspondance de forme avec une partie circulaire de la douille.

Pour résoudre le problème posé de permettre l'introduction sans effort de la douille et d'être certain que le clipage dans le fond de l'échancrure est bien réalisé, les agencements de clipage sont constitués par deux bossages profilés formés symétriquement de part et d'autre de l'ouverture de l'échancrure, chaque bossage présentant, d'une part, facialement, une pente d'introduction créant l'effort résistant au moment de l'introduction de la douille à partir de l'ouverture de l'échancrure, ladite pente étant prolongée par une autre pente d'angulation différente pour diriger la douille en position de butée dans le fond de l'échancrure et, d'autre part, latéralement, un profil de retenue pour assurer le blocage irréversible de la douille positionnée dans le fond de l'échancrure.

Il en résulte qu'après positionnement de la douille au niveau de l'ouverture de l'échancrure, soit ladite douille échappe l'échancrure, soit ladite douille est naturellement et automatiquement dirigée dans le fond de l'échancrure correspondant à son clipage.

Compte tenu de ces caractéristiques, la pente d'introduction fait un angle d'environ 45° par rapport au plan défini par l'échancrure, ladite pente étant orientée d'une manière divergente par rapport audit plan.
La pente conformée pour diriger la douille en position de butée dans le fond de l'échancrure, fait un angle d'environ 15° par rapport au plan défini par l'échancrure, ladite pente étant orientée d'une manière convergente par rapport audit plan.

Pour résoudre le problème posé d'éviter tout risque de désaccouplement, le profil de retenue présente une forme partiellement circulaire en correspondance avec une partie de la douille.

Un autre problème que se propose de résoudre l'invention est d'augmenter l'effet de clipage obtenu et d'éviter tout risque de désaccouplement intempestif.
Pour résoudre un tel problème, les agencements de clipage sont complétés par un bossage semi-circulaire formé d'une manière concentrique et symétrique au fond de l'échancrure qui est arrondie, ledit bossage étant apte à coopérer avec une partie de la douille pour assurer son blocage dans ledit gond.

Comme indiqué dans la partie introductive de la description, l'invention trouve une application particulièrement avantageuse dans le domaine des véhicules automobiles et plus particulièrement lorsque la douille présente une portée circulaire ou bague montée avec capacité de coulissement coaxial limité à l'encontre d'un ressort de rappel, l'une des extrémités de la portée délimitant, au droit d'une gorge d'introduction dans l'échancrure, une collerette qui coopère avec les agencements de clipage.

Dans cette forme de réalisation de la douille, après introduction de la gorge dans l'échancrure et engagement au fond de ladite gorge, la collerette est en butée par sa face externe avec le profil de retenue latéral des deux bossages d'entrée et en butée par sa face interne avec le bossage semi-circulaire en fond d'introduction.

L'invention est exposée ci-après plus en détail à l'aide des figures des dessins annexés dans lesquels :
- la figure 1 est une vue de face d'un exemple indicatif nullement limitatif d'une forme de réalisation d'une platine support présentant une échancrure destinée à recevoir une douille, non représentée, ladite platine support présentant, en combinaison avec l'échancrure, les agencements de clipage du dispositif de fixation selon l'invention ;
- la figure 2 est une vue en coupe transversale considérée selon la ligne 2-2 de la figure 1;
- la figure 3 est une vue en perspective d'un exemple de réalisation d'une douille de connexion pour câble avant introduction dans l'échancrure d'une partie d'une platine support, selon les caractéristiques de l'invention ;
- la figure 4 est une vue correspondant à la figure 3 montrant l'introduction de la douille de connexion
- la figure 5 est une vue en perspective correspondant à la figure 4 après introduction totale de la douille dans l'échancrure correspondant à la position de clipage.

Comme indiqué, l'invention concerne un dispositif de fixation d'un câble (c) dans une platine support (1) présentant au moins une échancrure (1a) pour l'engagement d'une douille de connexion (2) (ou arrêt de gaine) que présente ledit câble (c). D'une manière connue et dans l'exemple illustré, la douille (2) présente une gorge (2a) destinée à être engagée dans l'échancrure (1a). D'une manière connue, l'échancrure (1a) présente deux côtés rectilignes parallèles (1a1) et (1a2) raccordés par un fond arrondi (1a3). La gorge (2a) est destinée à être introduite par l'ouverture (1a4) de l'échancrure, pour être engagée dans ladite échancrure en appui dans le fond arrondi (1a3).

La douille (2) présente par ailleurs, toujours de manière connue, une portée ou bague (3) montée avec capacité de coulissement limité à l'encontre d'un organe élastique de rappel sous forme d'un ressort. L'une des extrémités de la bague coulissante (3) présente, au droit de la gorge (2a), une collerette (3a).

L'engagement de la douille (2) dans l'échancrure (1a) s'effectue dans le même plan que celui défini par ladite échancrure et à partir de son ouverture (1a4).

Selon une caractéristique à la base de l'invention, le dispositif de fixation du câble comprend, au niveau de l'ouverture (1a4) de l'échancrure (1a), des agencements de clipage (1b) et (1c) formés en débordement de l'une au moins des faces d'une partie de la platine support (1) au niveau de ladite échancrure (1a).

Comme il sera indiqué dans la suite de la description, ces agencements de clipage (1b) et (1c) coopèrent avec une partie de la douille (2), notamment de la bague coulissante (3) pour assurer les fonctions suivantes :
- créer un effort résistant au moment de l'introduction de la douille (2) à partir de l'ouverture (1a4) de l'échancrure (1a) ;
- diriger la douille (2) en position de butée dans le fond (1a3) de l'échancrure (1a) ;
- assurer le blocage irréversible de la douille (2) positionnée dans le fond (1a3) de l'échancrure (1a).

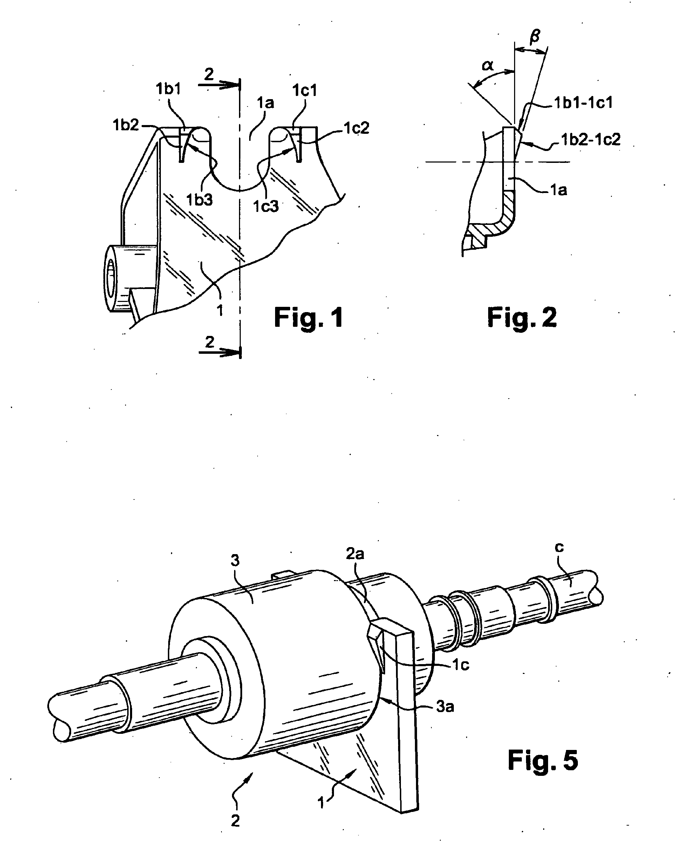

Dans ce but, comme le montrent plus particulièrement, les figures 1, 2 et 3, les agencements de clipage (1b) et (1c) sont constitués par deux bossages profilés formés symétriquement de part et d'autre de l'ouverture (1a4) de l'échancrure (1a). Chaque bossage (1b) et (1c) présente, d'une part, facialement, une pente d'introduction (1b1) et (1c1) prolongée par une autre pente d'angulation différente (1b2) et (1c2) et, d'autre part, latéralement un profil de retenue (1b3), (1c3).
Autrement dit, les pentes d'introduction (1b1), (1c1) sont destinées à créer l'effort résistant au moment de l'introduction de la douille à partir de l'ouverture de l'échancrure, tandis que les pentes (1b2) et (1c2) sont destinées à diriger la douille (2), en position de butée, dans le fond (1a3) de l'échancrure (1a).

Les profils de retenue (1b3) et (1c3) assurent le blocage irréversible de la douille positionné dans le fond de l'échancrure.

Avantageusement et comme le montre notamment la figure 2, la pente d'introduction (1b1) et (1c1) fait un angle (α) d'environ 45° par rapport au plan défini par l'échancrure (1a). Cette pente (1b1) et (1c1) est orientée d'une manière divergente par rapport au plan précédemment défini.
Les pentes (1b2) et (1c2) font un angle (β) d'environ 15° par rapport au plan défini par l'échancrure (1a). Ces pentes (1b2) et (1c2), sont orientées d'une manière convergente par rapport audit plan.
Quant aux profils de retenue (1b3) et (1c3), ces derniers présentent une forme partiellement circulaire en correspondance avec une partie de la douille (2), notamment la gorge (2a)

Suivant une autre caractéristique de l'invention, les bossages de clipage (1b) et (1c) sont complétés par un bossage semi-circulaire (1d) formé d'une manière concentrique et symétrique au fond (1a3) de l'échancrure (1a). Comme il sera indiqué dans la suit de la description, ce bossage semi-circulaire (1d) est apte à coopérer avec une partie de la douille, notamment de la bague coulissante (3) pour assurer son blocage dans le gond de l'échancrure (1a).

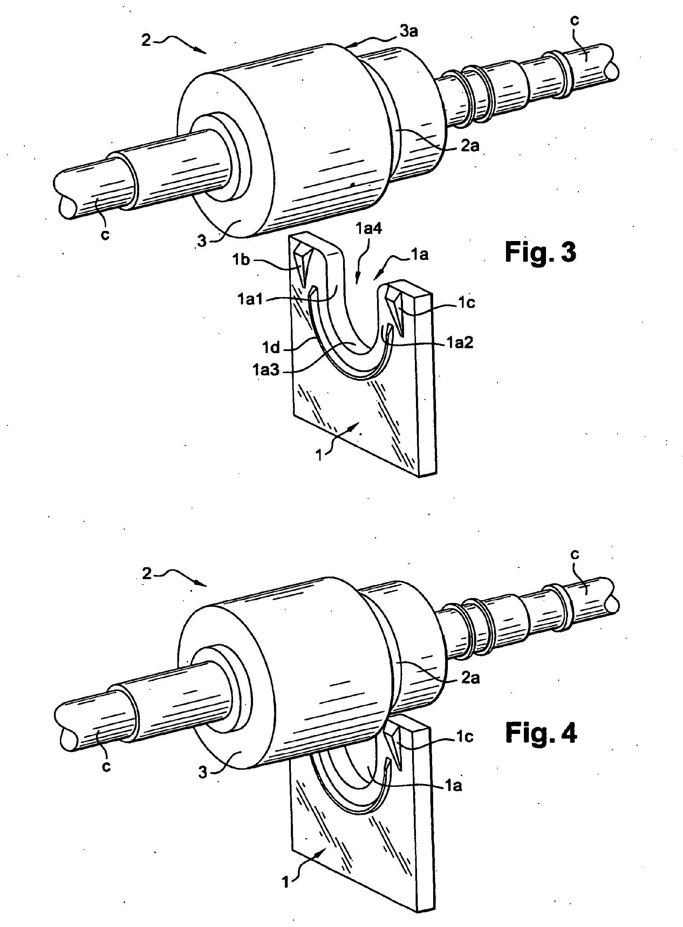

On renvoie aux figures 3, 4 et 5 qui montrent les différentes phases d'introduction et de clipage de la douille dans le fond de l'échancrure (1a) et de la platine support (1), et notamment les trois fonctions exercées par les bossages latéraux de clipage (1b) et (1c), comme indiqué précédemment.

Après introduction de la gorge (2a) dans l'échancrure (1a) et engagement au fond de ladite gorge, la collerette (3a), préalablement sollicitée par les bossages (1b) et (1c), est en butée par sa face externe avec le profil de retenue latérale (1b3) et (1c3) des deux bossages (1b) et (1c) et en butée par sa face interne avec le bossage semi-circulaire (1d) en fond d'introduction.

Les avantages ressortent bien de la description, en particulier on souligne et on rappelle qu'après introduction dans la gorge de la douille de connexion et sous un effort de pression, la douille est automatiquement et naturellement positionnée dans le fond de l'échancrure correspondant à son clipage. Le profil des bossages latéraux d'entrée provoque un phénomène d'accompagnement de la douille dans le fond de l'échancrure garantissant le clipage.
On observe également qu'aucune pièce rapportée ou autre élément, n'est nécessaire au niveau de la platine support, les agencements de clipage étant formés directement lors de la fabrication de ladite platine support.

## Revendications

1. Dispositif de fixation d'un câble dans une platine support (1) présentant au moins une échancrure (1a) pour l'engagement dans le même plan que celui défini par ladite échancrure et à partir de son ouverture (1a4), d'une douille de connexion (2) que présente ledit câble, ledit dispositif comprenant, au niveau de l'ouverture de l'échancrure (1a), de agencements de clipage (1b) - (1c) formés en débordement de l'une au moins des faces d'une partie de la platine support (1) présentant l'échancrure (1a), lesdits agencements (1b) - (1c) coopérant avec une partie de la douille (2) **caractérisé en ce que** les agencements de clipage sont constitués par deux bossages profilés (1b) et (1c) formées symétriquement de part et d'autre de l'ouverture de l'échancrure (1a), chaque bossage présentant, d'une part, facialement, une pente d'introduction (1c1) - (1b1) créant un effort résistant au moment de l'introduction de la douille (2) à partir de l'ouverture (la4) de l'échancrure, chacune desdites pentes étant prolongée par une autre pente (1c2) - (1b2) d'angulation différente pour diriger la douille (2) en position de butée dans le fond de l'échancrure (1a) et, d'autre part, latéralement, un profil de retenue (1b3) - (1c3) de forme partiellement circulaire en correspondance avec une partie de la douille (2) pour assurer le blocage irréversible de ladite douille (2) positionnée dans le fond de l'échancrure (1a).

2. Dispositif selon la revendication 1, **caractérisé en ce que** la pente d'introduction (1c1) - (1b1) fait un angle d'environ 45° par rapport au plan défini par l'échancrure (1a), ladite pente étant orientée d'une manière divergente par rapport audit plan.

3. Dispositif selon la revendication 1, **caractérisé en ce que** la pente (1b2) - (1c2) conformée pour diriger la douille (2) en position de butée dans le fond de l'échancrure, fait un angle d'environ 15° par rapport au plan défini par l'échancrure (1a), ladite pente étant orientée d'une manière convergente par rapport audit plan.

4. Dispositif selon les revendications 1 à 3, **caractérisé en ce que** les agencements de clipage sont complétés par un bossage semi-circulaire (1d) formé d'une manière concentrique et symétrique au fond de l'échancrure (1a) qui est arrondie, ledit bossage (1d) étant apte à coopérer avec une partie de la douille (2) pour assurer son blocage dans ladite platine support (1).

5. Dispositif selon la revendication 1, **caractérisé en ce que** la douille (2) présente une portée circulaire (3) montée avec capacité de coulissement coaxial limité à l'encontre d'un ressort de rappel, l'une des extrémités de la portée délimitant, au droit d'une gorge d'introduction (2a) dans l'échancrure, une collerette (3a) qui coopère avec les agencements de clipage.

6. Dispositif selon la revendication 1, **caractérisé en ce qu'**après introduction de la gorge (2a) dans l'échancrure (1a) et engagement au fond de ladite gorge, la collerette (3a) est en butée par sa face externe avec le profil de retenue latéral des deux bossages d'entrée (1b3) - (1c3) et en butée par sa face interne avec le bossage semi-circulaire (1d) en fond d'introduction.

## Claims

1. Device for fixing a cable in a support plate (1) having at least one cradle (1a) allowing engagement in the same plane as that defined by said cradle and, via its opening (1a4), a connecting socket (2) of said cable, said device comprising, at the level of the opening of cradle (1a), a clipping arrangement (1b) - (1c) which projects beyond at least one of the faces of part of the support plate (1) which has cradle (1a), said arrangement (1b) - (1c) cooperating with part of the socket (2), **characterised in that** the clipping arrangement consists of two shaped protrusions (1b) and (1c) located symmetrically either side of the opening of cradle (1a), each protrusion having, firstly, a frontal insertion slope (1c1) - (1b1) which creates a force which resists the force exerted during introduction of socket (2) via opening (1a4) of the cradle, each of said slopes extending as another slope (1a2) - (1b2) which is angled differently in order to direct socket (2) into a position where it abuts on the bottom of cradle (1a) and, secondly, a lateral retention profile (1b3) - (1c3) having a partially circular shape which matches part of socket (2) in order to ensure irreversible locking of said socket (2) in the bottom of cradle (1a).

2. Device as claimed in claim 1, **characterised in that** insertion slope (1c1) - (1b1) forms an angle of approximately 45° relative to the plane defined by cradle (1a), said slope being divergently oriented relative to said plane.

3. Device as claimed in claim 1, **characterised in that** slope (1b2) - (1c2) shaped to direct socket (2) into a position where it abuts on the bottom of the cradle forms an angle of approximately 15° relative to the plane defined by cradle (1a), said slope being convergently oriented relative to said plane.

4. Device as claimed in claims 1 to 3, **characterised in that** the clipping arrangement is supplemented by a semi-circular ridge (1d) formed concentrically and symmetrically at the bottom of cradle (1a) which is rounded, said ridge (1d) being capable of cooperating with part of socket (2) to ensure that it locks in said support plate.

5. Device as claimed in claim 1, **characterised in that** socket (2) has a circular bearing surface (3) mounted with the ability to slide coaxially to a limited extent in opposition to a return spring, one of the ends of the bearing surface delineating, at right angles to a groove (2a) designed to fit into the cradle, a flange (3a) which cooperates with the clipping arrangement.

6. Device as claimed in claim 1, **characterised in that**, after fitting groove (2a) in cradle (1a) and engagement in the bottom of said groove, the outer face of flange (3a) abuts against the lateral retention profile of the two inlet protrusions (1b3) - (1c3) and its inner face abuts against the semicircular ridge (1d) at the bottom.

## Patentansprüche

1. Vorrichtung zur Befestigung eines Kabels in einer Trägerplatte (1) mit mindestens einem Ausschnitt (1a) zum Einsetzen einer Verbindungshülse (2) des besagten Kabels in der gleichen Ebene wie derjenigen, die von dem besagten Ausschnitt vorgegeben wird, und ausgehend von seiner Öffnung (1a4), wobei die Vorrichtung im Bereich der Öffnung des Ausschnitts (1a) Vorkehrungen zum Aufklipsen (1b) - (1c) besitzt, die auf mindestens einer Seite eines Teils der Trägerplatte (1) mit dem Ausschnitt (1a) vorspringend ausgebildet sind, wobei diese Vorkehrungen (1b) - (1c) mit einem Teil der Hülse (2) zusammenwirken, **dadurch gekennzeichnet, dass** die Vorkehrungen zum Aufklipsen aus zwei profilierten Vorsprüngen (1b und 1c) bestehen, die symmetrisch beiderseits der Öffnung des Ausschnitts (1a) ausgebildet sind, wobei jeder Vorsprung einerseits auf der Vorderseite eine Einführungsschräge (1c1 - Ibl) aufweist, die beim Einführen der Hülse (2) ausgehend von der Öffnung (1a4) des Ausschnitts eine Widerstandskraft ausübt, wobei jede dieser schrägen Ebenen durch eine andere Schräge (1a2- 1b2) mit einem unterschiedlichen Winkel fortgesetzt wird, um die Hülse (2) in Anschlagposition im Grund des Ausschnitts (1a) zu führen, und andererseits seitlich ein teilweise kreisförmiges Rückhalteprofil (1b3 - 1c3) in Entsprechung zu einem Teil der Hülse (2), um die unumkehrbare Blockierung der im Grund des Ausschnitts (1a) positionierten Hülse (2) zu gewährleisten.

2. Vorrichtung nach Anspruch 1, **dadurch gekennzeichnet, dass** die Einführungsschräge (1c1 - 1b1) einen Winkel von ca. 45° gegenüber der von dem Ausschnitt (1a) vorgegebenen Ebene bildet, wobei die besagte Schräge gegenüber der besagten Ebene in divergierender Weise ausgerichtet ist.

3. Vorrichtung nach Anspruch 1, **dadurch gekennzeichnet, dass** die Schräge (1b2 - 1c2), die zur Führung der Hülse (2) in Anschlagposition im Grund des Ausschnitts ausgeformt ist, einen Winkel von ca. 15° gegenüber der von dem Ausschnitt (1a) vorgegebenen Ebene bildet, wobei die besagte Schräge gegenüber der besagten Ebene in konvergierender Weise ausgerichtet ist.

4. Vorrichtung nach den Ansprüchen 1 - 3, **dadurch gekennzeichnet, dass** die Vorkehrungen zum Aufklipsen durch einen halbkreisförmigen Vorsprung (1d), der konzentrisch und symmetrisch im Grund des bogenförmigen Ausschnitts (1a) ausgebildet ist, ergänzt werden, wobei der besagte Vorsprung (1d) geeignet ist, mit einem Teil der Hülse (2) zusammenzuwirken, um ihre Blockierung in der besagten Trägerplatte zu gewährleisten.

5. Vorrichtung nach Anspruch 1, **dadurch gekennzeichnet, dass** die Hülse (2) eine - begrenzt durch eine Rückholfeder - koaxial verschiebbar angebrachte kreisförmige (3) Auflagefläche aufweist, wobei eines der Enden der Auflagefläche rechtwinklig zu einer Nut (2a) für die Einführung in den Ausschnitt einen Kreisrand (3a) umgrenzt, der mit den Vorkehrungen zum Aufklipsen zusammenwirkt.

6. Vorrichtung nach Anspruch 1, **dadurch gekennzeichnet, dass** der Kreisrand (3a) nach dem Einführen der Nut (2a) in den Ausschnitt (1a) und dem Einsetzen in den Grund der besagten Nut mit seiner Außenseite am seitlichen Rückhalteprofil der beiden Einführungsvorsprünge (1b3) - (1c3) und mit der Innenseite an dem halbkreisförmigen Vorsprung (1d) in Anschlag ist.
